# EUROPÄISCHE PATENTSCHRIFT

(11) **EP 2 165 906 B1**
(45) Veröffentlichungstag und Bekanntmachung des Hinweises auf die Patenterteilung: **11.05.2011**
(21) Anmeldenummer: 09090014.3
(22) Anmeldetag: 08.09.2009
(51) Int. Cl.: B61D 17/04, B62D 31/02

(54) **Schienenfahrzeug-Wagenkasten und Verfahren zu dessen Herstellung**
Railway vehicle body and method for its manufacture
Caisse de véhicule ferroviaire et son procédé de fabrication

(30) Priorität: 19.09.2008 DE 102008048083
(43) Veröffentlichungstag der Anmeldung: 24.03.2010
(73) Patentinhaber: Bombardier Transportation GmbH, 10785 Berlin (DE)
(72) Erfinder: Blüthgen, Jörg, 02681 Crostau (DE); Schwalbach, Michael, 13467 Berlin (DE); Mieth, Steffen, 02733 Cunewalde (DE)
(74) Vertreter: Patentanwälte Bressel und Partner

(56) Entgegenhaltungen:
- DE-A1-102006 045 378
- DE-B3-102005 062 063
- US-A1- 2005 076 604
- US-A1- 2005 200 164

## Beschreibung

Die Erfindung betrifft einen Schienenfahrzeug-Wagenkasten und ein Verfahren zur Herstellung eines solchen Wagenkastens.

Wagenkästen von Schienenfahrzeugen bestehen üblicherweise aus tragenden Teilen, wie Längsträgern, Querträgern und Säulen, aus denen ein Gerippe des Wagenkastens hergestellt wird, indem die tragenden Teile miteinander verbunden werden, z.B. verschweißt und/oder vernietet werden. Auf die Außenseite des Gerippes werden die Außenoberfläche bildende Außenwandelemente, meist Bleche, aufgebracht, die auch eine das Gerippe aussteifende Funktion und zumindest lokal eine tragende Teile verstärkende Funktion haben. In Fensteröffnungen des Wagenkastens, z.B. zwischen sich im Wesentlichen in vertikaler Richtung erstreckenden Säulen, werden Fenster eingesetzt. In entsprechender Weise wird mit Türöffnungen und Türen verfahren. Nicht jeder Wagenkasten jedoch weist an den seitlichen Außenoberflächen Fenster und Türen auf.

Die zuvor beschriebene Konstruktion eines Wagenkastens ist zwar üblich. Jedoch sind Abweichungen und andere Konstruktionen bekannt. Die Erfindung ist nicht auf die zuvor beschriebene Konstruktion beschränkt.

Entsprechend den erwartenden Belastungen (insbesondere Kräfte und Vibrationen) können Bauteile des Wagenkastens (z.B. Träger, Profile, abgekantete Bleche, gerade Bleche) verstärkt werden. Die Verstärkung kann insbesondere durch Vergrößerung der Dicke, Erhöhung der Festigkeit und/oder durch einer bestimmte Oberflächenbeschaffenheit erreicht werden. Z.B. können zusätzliche Träger oder Rippen mit tragenden Teilen verbunden werden und/oder mit abgekanteten oder geraden Blechen verbunden werden. Insbesondere zur Verstärkung von geraden oder leicht gekrümmten Blechen (z.B. Außenwandblechen des Wagenkastens) werden in der Regel dickere Bleche eingesetzt oder Rippen, zusätzliche Bleche oder Blechstreifen an der Innenseite befestigt. Die Herstellung eines durchgehenden Blechs ohne Fügestellen, das Bereiche mit unterschiedlicher Blechdicke aufweist, ist sehr aufwendig, insbesondere bei Dünnblech, wie es in der Regel für Außenwände des Wagenkastens eingesetzt wird. Unter Dünnblech wird Blech verstanden, das eine geringere Dicke als 5 mm aufweist. Die Erfindung betrifft insbesondere die Verstärkung von Dünnblechen. Mit besonderem Vorteil ist die Erfindung bei Blechen mit einer geringeren Dicke als 3 mm, vorzugsweise 2 mm oder weniger anwendbar.

Aus den genannten Gründen werden Blechdicken so gewählt, dass die Blechdicke in den Teilbereichen mit der größten Belastung ausreichend ist. Das Blechteil (ein gerades Blech, ein abgekantetes Blech oder ein Profil) weist aber auch in den anderen, weniger belasteten Teilbereichen dieselbe Blechdicke auf. Im Ergebnis sind daher das Gewicht und der Materialbedarf größer als zwingend erforderlich.

DE 102006045378 A1 offenbart ein Schienenfahrzeug mit einer Tragstruktur, bei welcher zumindest die Seitenwände zumindest teilweise aus vorgefertigten Elementen aus umgeformten Blechen bestehen und die Elemente an angrenzende Bauteile durch Schweißnähte angebunden sind.

US 2005/0200164 A1 beschreibt einen Automobil-Fahrzeugkörper, einschließlich einer Bodenstruktur, einer Dachstruktur und einem Türöffnungsblatt, das mit der Boden- und Dachstruktur verschweißt ist. Das Türöffnungsblatt ist von maßgeschneiderten geschweißten Metallblechen mit einer ersten Dicke des Metalls für einen unteren Bereich und einer zweiten Dicke des Metalls für einen oberen Bereich des Türöffnungsblatts gebildet. Als Beispiel wird eine Dicke von 2,2 mm für den unteren Bereich und eine Dicke von 1,2 mm für den oberen Bereich offenbart.

US 2005/0076604 A1 beschreibt ein maßgeschneidertes Blech mit einer hineinführenden Öffnungsstruktur. Insbesondere wird in Verbindung mit Figur 3 der Druckschrift ein maßgeschneidertes Blech beschrieben, das aus 2 Metallplatten mit unterschiedlichen Dicken besteht, die miteinander stoßverschweißt sind, sodass sie einen gestuften Bereich bilden.

Es ist eine Aufgabe der vorliegenden Erfindung, einen Schienenfahrzeug-Wagenkasten und ein Verfahren zur Herstellung von Schienenfahrzeug-Wagenkästen anzugeben, die es ermöglichen, weniger Material zu verwenden und somit das Gewicht zu reduzieren. Dabei sollen die Anforderungen an die Belastbarkeit in besonders belasteten Teilbereichen sicher erfüllt werden können. Diese Aufgabe wird durch einen Schienenfahrzeug-Wagenkästen gemäß Anspruch 1 und ein Verfahren zu einer Austellung gemäß Anspruch 4 gelöst.

Es wird ein Schienenfahrzeug-Wagenkasten vorgeschlagen, der zumindest ein aus Blechen hergestelltes Blechelement aufweist, bei dem es sich z.B. um ein Außenwandelement, ein Profilelement und/oder einen Träger handelt. Das Blechelement weist ein erstes Blechteil mit einer ersten Blechdicke und ein zweites Blechteil mit einer zweiten Blechdicke auf, wobei die erste Blechdicke kleiner ist als die zweite Blechdicke. Insbesondere ist die Blechdicke der Blechteile jeweils konstant. Das erste Blechteil und das zweite Blechteil weisen jeweils ein stirnseitiges Ende auf, das sich quer zu den großflächigen Blechoberflächen des Blechteils über die Dicke des Blechteils erstreckt. Anders ausgedrückt verbindet die Fläche am stirnseitigen Ende die auf der Vorderseite und Rückseite (bzw. bei Außenwandblechen z.B. Innenseite oder Außenseite) einander gegenüberliegenden großflächigen Blechoberflächen, die in dem Abstand zueinander liegen, welcher durch die Dicke des Blechteils gegeben ist. Die stirnseitigen Enden des ersten Blechteils und des zweiten Blechteils sind über eine Schweißnaht oder Lötnaht miteinander verbunden, so dass ein fester Verbund des ersten und des zweiten Blechteils hergestellt ist.

In der Regel verlaufen die stirnseitigen Enden der Blechteile geradlinig, so dass die Schweißnaht oder Lötnaht ebenfalls eine geradlinig verlaufende Schweißnaht oder Lötnaht ist. Es ist jedoch auch möglich, dass die stirnseitigen Enden einen anderen Verlauf aufweisen, wobei der Verlauf der stirnseitigen Enden des ersten Blechteils und des zweiten Blechteils vorzugsweise komplementär zueinander ist, so dass die beiden Blechteile an den stirnseitigen Enden durch eine durchgehende Schweißnaht oder Lötnaht miteinander verbunden werden können.

Bei der Schweißnaht oder Lötnaht handelt es sich vorzugsweise um eine Stumpfnaht. Im Fall einer Schweißnaht wird diese bevorzugter Maßen durch Laserstrahlnahtschweißung erzielt. Grundsätzlich umfasst die Erfindung jedoch jedes für die Verbindung der stirnseitigen Enden geeignete Schweißverfahren, ohne oder mit Zusatzstoff, der durch den Schweißvorgang Teil der Schweißnaht wird.

Nach der Herstellung der Schweißnaht oder Lötnaht und damit der Herstellung des aus dem ersten und dem zweiten Blechteil bestehenden Blechelements kann das Blechelement weiter verarbeitet werden, insbesondere verformt werden, z.B. zu einem Profil verarbeitet werden, abgekantet werden und/oder die großflächige Blechoberfläche gekrümmt werden. Auch kann die Schweißnaht oder Lötnaht geschliffen und/oder poliert werden, wobei optional durch die Schweißnaht oder Lötnaht gebildete Oberflächenunebenheiten durch ein zusätzliches Füllmaterial (z.B. Spachtelmasse) aufgefüllt werden können. Insbesondere Außenwandblechelemente können wie üblich lackiert werden.

Das zweite Blechteil, welches die größere Blechdicke aufweist, kann nun im Wagenkasten an Stellen angeordnet werden, an denen z.B. hinsichtlich der Festigkeit größere Anforderungen gestellt werden als in den Bereichen, in denen das erste Blechteil angeordnet wird.

Entsprechend den an das Blechelement gestellten Anforderungen können das erste Blechteil und das zweite Blechteil aus derselben Art Blech bestehen oder aus verschiedenen Blecharten bestehen. Z.B. kann für das zweite Blechteil zusätzlich zu der Eigenschaft der größeren Blechdicke auch ein Blech (z.B. Stahlblech) aus einem anderen Material größerer Materialfestigkeit gewählt werden. Zu dem erfindungsgemäßen Blechelement lassen sich beliebige verschiedene oder gleiche Materialen (insbesondere Metalle bzw. Metalllegierungen) als Blechteile miteinander verbinden, die an ihren Stirnseiten miteinander verbunden (insbesondere aneinander geschweißt oder gelötet) werden können. Durch Löten lassen sich z. B. auch Aluminiumblechteile miteinander verbinden.

Indem das Blechelement lediglich im Bereich des zweiten Blechteils eine größere Blechdicke aufweist, können Gewicht und Materialkosten gespart werden. Trotz des geringen Gewichts kann die Blechdicke und/oder die Fläche des zweiten Blechteils so groß gewählt werden, dass in den besonders belasteten Bereichen des Wagenkastens eine Reserve für besonders hohe Belastungen besteht. Anders ausgedrückt kann das zweite Blechteil für besonders hohe Belastungen ausgelegt werden, ohne das Gesamtgewicht signifikant zu erhöhen. Im Vergleich zu vorbekannten Lösungen kann daher ein besonders stabiler Wagenkasten bei dennoch reduziertem Gewicht hergestellt werden.

Ein weiterer Vorteil des erfindungsgemäßen Blechelements liegt darin, dass Verstärkungen durch Anbringen von zusätzlichen Bauteilen aus anderem Material ganz oder teilweise vermieden werden können. Das Problem der Korrosion aufgrund verschiedener Materialien (Metalle) kann daher reduziert werden.

Insbesondere für die Herstellung eines Außenwandelements des Wagenkastens sind bzw. werden das erste Blechteil und das zweite Blechteil an den stirnseitigen Enden derart über die Schweißnaht oder Lötnaht miteinander verbunden, dass sich eine der großflächigen Blechoberflächen ohne Versatz über die Schweißnaht oder Lötnaht erstreckt und die gegenüberliegende Blechoberfläche aufgrund der unterschiedlichen Blechdicke des ersten und des zweiten Blechteils mit Versatz über die Schweißnaht oder Lötnaht erstreckt. Anders ausgedrückt wird unter einem Versatz ein Niveauunterschied der großflächigen Blechoberflächen des ersten und des zweiten Blechteils verstanden. Die Seite ohne Versatz kann daher die Außenseite des Schienenfahrzeugs bilden. Entsprechendes gilt auch dann, wenn das Blechelement zu einem Profil oder Träger verformt wurde, das bzw. der einen Teil der Außenoberfläche des Schienenfahrzeugs bildet.

Das Blechelement ist ein Außenwandelement und der Wagenkasten weist zusätzlich einen Träger auf. Dieser Träger kann optional ebenfalls ein erfindungsgemäß hergestelltes Blechelement aufweisen. Das Blechelement ist an einem zweiten stirnseitigen Ende, das von dem zweiten Blechteil gebildet ist, mit dem Träger verbunden, insbesondere verschweißt. Z.B. befindet sich das zweite stirnseitige Ende des zweiten Blechteils an einer Seite des zweiten Blechteils, die der Seite des ersten stirnseitigen Endes gegenüberliegt. Das erste stirnseitige Ende ist das stirnseitige Ende, an dem das zweite Blechteil mit dem ersten Blechteil des Blechelements über die Schweißnaht verschweißt (oder über die Lötnaht verlötet) ist oder wird. Grundsätzlich ist es möglich, dass das zweite Blechteil zuerst mit dem Träger verbunden wird und dann mit dem ersten Blechteil. In der Regel wird jedoch zunächst aus den Blechteilen das Blechelement hergestellt.

Wenn das erste stlrnseltlge Ende und das zweite stirnseitige Ende des zweiten Blechteils einander gegenüberliegen und auch die Verbindung zwischen dem Träger und dem zweiten Blechelement eine linienartige Verbindung (z.B. eine linienartige Schweißnaht oder Lötnaht) ist, bildet das zweite Blechteil einen streifenförmigen Abschnitt des Blechelements, der sich zwischen dem Träger und dem ersten Blechteil erstreckt. Im Ergebnis ist der Wagenkasten daher in einem streifenförmigen Bereich, der durch das zweite Blechteil gebildet wird, am Rand des Trägers zusätzlich verstärkt. Der streifenförmige Bereich des zweiten Blechteils kann dabei zwei Funktionen erfüllen. Erstens kann er die tragende Funktion des Trägers unterstützen, d.h. Träger und zweites Blechteil erfüllen gemeinsam eine tragende Funktion. Zum anderen gewährleistet das zweite Blechteil die Einleitung von Kräften in das gesamte Blechelement, d.h. auch in das erste Blechteil.

Der Träger, der mit dem zweiten Blechteil verbunden ist, ist eine sich von unten nach oben erstreckende Säule des Wagenkastens. Dabei begrenzt die Säule eine Fensteröffnung des Wagenkastens seitlich, wobei sich das zweite Blechteil von unten nach oben lediglich bis zu der Fensteröffnung erstreckt, nicht aber über den Unterrand der Festeröffnung hinaus. Auf diese Weise findet durch das zweite Blechteil eine Verstärkung des besonders belasteten Bereichs der Außenwand unterhalb der Fensteröffnung entlang der Säule statt.

Bei einer anderen konkreten Ausgestaltung eines Blechteils, die optional mit der zuvor beschriebenen konkreten Ausgestaltung kombiniert werden kann, ist das Blechelement ein Träger, der durch Verformen, insbesondere durch Abkanten, des aus dem ersten und zweiten Blechelement hergestellten Verbundes hergestellt ist, so dass die großflächigen Blechoberflächen abgewinkelt und/oder gekrümmt verlaufen, wobei der Verlauf der Schweißnaht oder Lötnaht durch die Verformung ebenfalls abgewinkelt und/oder gekrümmt Ist.

Insbesondere wenn das zweite Blechelement an zwei einander gegenüberliegenden stirnseitigen Enden jeweils mit einem ersten Blechelement geringerer Blechdicke verschweißt ist, kann auf diese Weise ein Träger hergestellt werden, in dessen Verlauf in Längsrichtung des Trägers ein Abschnitt durch das zweite Blechelement gebildet ist. Dieser aufgrund der größeren Blechdicke des zweiten Blechelements verstärkte Abschnitt ist daher in der Lage, besondere Belastungen aufzunehmen. Z.B. kann der Träger ein Querträger sein, der sich oberhalb oder unterhalb zumindest einer Fensteröffnung oder Türöffnung des Wagenkastens erstreckt. In den durch das zweite Blechelement gebildeten Abschnitt des Querträgers können z.B. Kräfte von anderen Trägern und/oder in andere Träger eingeleitet werden.

Die Erfindung betrifft ferner ein Verfahren zum Herstellen eines Schienenfahrzeug-Wagenkastens, wobei ein Blechelement des Wagenkastens, insbesondere ein Außenwandelement, ein Profilelement und/oder ein Träger, aus Blechen hergestellt wird, wobei
- das Blechelement zumindest aus einem ersten Blechteil mit einer ersten Blechdicke und einem zweiten Blechteil mit einer zweiten Blechdicke hergestellt wird, wobei die erste Blechdicke kleiner ist als die zweite Blechdicke,
- das erste Blechteil und das zweite Blechteil jeweils ein stirnseitiges Ende aufweisen, das sich quer zu den großflächigen Blechoberflächen des Blechteils über die Dicke des Blechteils erstreckt;
- die stirnseitigen Enden des ersten Blechteils und des zweiten Blechteils über eine Schweißnaht oder Lötnaht miteinander verbunden werden, so dass ein fester Verbund des ersten und des zweiten Blechteils hergestellt wird.

Vorteile und Weiterbildungen des Verfahrens wurden teilweise bereits beschrieben. Weitere Ausgestaltungen des Verfahrens ergeben sich im Übrigen aus der Beschreibung des erfindungsgemäßen Wagenkastens.

Ausführungsbeispiele und weitere Merkmale der Erfindung werden nun unter Bezugnahme auf die beigefügte Zeichnung beschrieben. Die einzelnen Figuren der Zeichnung zeigen:
- Fig. 1: eine dreidimensionale Ansicht der Außenseite eines Teils eines Wagenkastens,
- Fig. 2: eine dreidimensionale Ansicht der Innenseite des in Fig. 1 gezeigten Wagenkastens,
- Fig. 3: einen horizontalen Querschnitt durch den in Fig. 1 und Fig. 2 dargestellten Wagenkasten,
- Fig. 4: einen vergrößerten Ausschnitt des Querschnitts in Fig. 3 in dem mit IV gekennzeichneten Bereich,
- Fig. 5: einen Querschnitt durch einen Übergangsbereich zwischen einem ersten Blechteil mit geringerer Blechdicke und einem zweiten Blechteil mit größerer Blechdicke und
- Fig. 6: einen weiteren horizontalen Querschnitt durch den Wagenkastenteil in Fig. 1 und Fig. 2, wobei jedoch nur ein Teilbereich der Anordnung von Fig. 1 und Fig. 2 in Fig. 6 dargestellt ist.

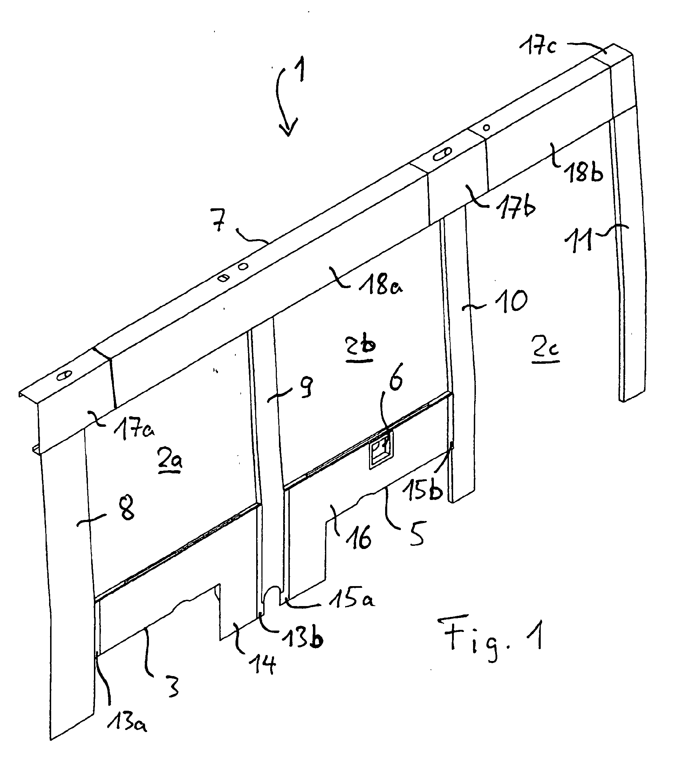

Der in Fig. 1 dargestellte Teil 1 eines Wagenkastens für ein Schienenfahrzeug, z.B. für eine Straßenbahn, weist vier sich von unten nach oben erstreckende säulenartige Träger 8, 9, 10, 11 auf, die an ihrer Oberseite mit einem Längsträger 7 verbunden (insbesondere verschweißt) sind. Zwischen den Trägern 8, 9 sowie 9, 10 ist jeweils ein Außenwand-Blechelement 3, 5 angeordnet. Durch die oberen Ränder der Blechelemente 3, 5, durch die seitlichen Ränder der Träger 8, 9 und 10 sowie durch den unteren Rand des Längsträgers 7 sind zwei Fensteröffnungen 2a, 2b gebildet. Durch die Seitenränder der Träger 10, 11 und den unteren Rand des Längsträgers 7 ist eine Türöffnung 2c gebildet.

Wie links oben aus Fig. 1 erkennbar ist, hat der Längsträger 7 ein C-förmiges Profil, wobei der untere Querschenkel des C kürzer ist als der obere Querschenkel. In Längsrichtung des Längsträgers 7 (d.h. in Fahrtrichtung des Schienenfahrzeugs) weist der Längsträger 7 verschiedene aufeinanderfolgende Abschnitte 17a, 18a, 17b, 18b, 17c auf. Diese Abschnitte 17, 18 sind jeweils aus verschiedenen Blechteilen gebildet. Dabei sind aufeinanderfolgende Abschnitte 17a, 18a; 18a, 17b; 17b, 18b sowie 18b, 17c jeweils an ihren stirnseitigen Enden, d.h. an den Stoßflächen der aneinander grenzenden Abschnitte, miteinander verschweißt.

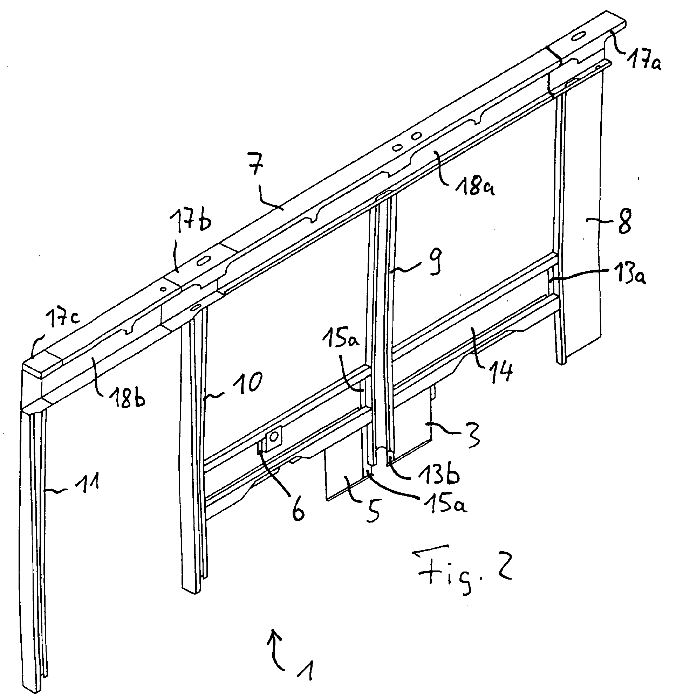

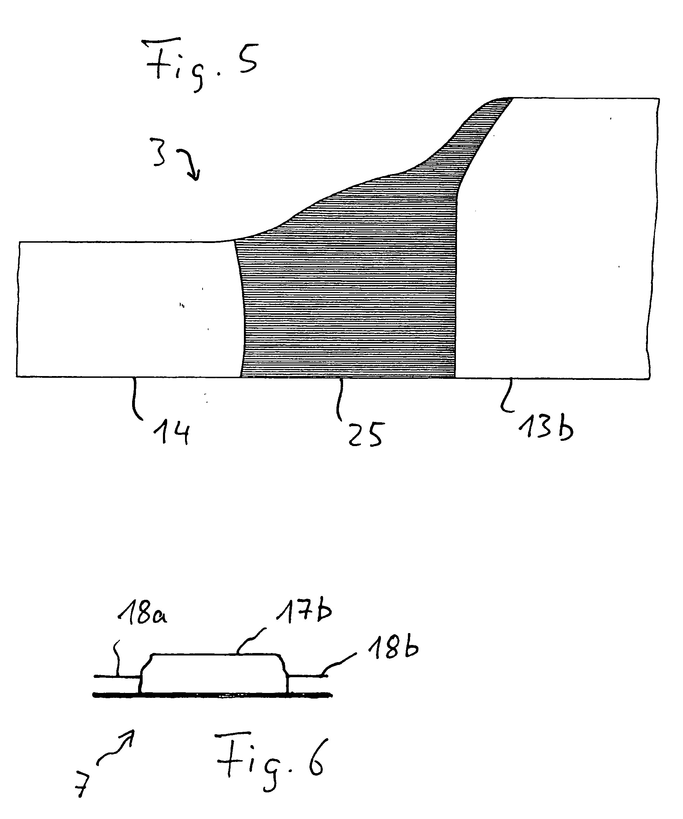

Zur Herstellung dieser Verbindungen zwischen den Abschnitten 17, 18 werden ebene Bleche an ihren stirnseitigen Enden über linienförmige Schweißnähte miteinander verbunden. Dabei weisen die Blechteile für die Abschnitte 17 eine größere Blechdicke auf als die Blechteile für die Abschnitte 18. Ferner werden dabei die Blechteile so miteinander verbunden, dass die eine der großflächigen Außenoberflächen, die nach dem Abkanten des Verbundes zu dem in Fig. 1 und Fig. 2 dargestellten C-förmigen Träger 7 die in Fig. 1 vorne und oben liegenden Oberflächenbereiche bildet, in einer durchgehenden Ebene positioniert ist. Auf diese Weise ist nach dem anschließenden Abkanten des Blechelements in den in Fig. 1 vorne und oben liegenden Oberflächenbereichen kein Versatz der Oberflächen der aufeinanderfolgenden Abschnitte 17, 18 vorhanden. Dagegen wäre bei vergrößerter Darstellung der Ansicht von Fig. 2 in den nach vorne und oben weisenden Oberflächenbereichen an den Übergangsstellen der Abschnitte 17, 18 ein solcher Versatz erkennbar. Diese Gestaltung zeigt auch der Querschnitt durch den Übergang der Abschnitte 18a, 17b, 18b des Längsträgers 7 in Fig. 6, wobei der Querschnitt nicht maßstäblich ist, sondern in Richtung der Blechdicke (vertikale Richtung in Fig. 6) überhöht dargestellt ist. Die in Fig. 6 unten liegende Oberflächenseite ist die Außenseite des Wagenkasten-Teils 1. Die oben in Fig. 6 liegende Oberfläche mit dem Versatz zwischen Abschnitt 18a, 17b sowie zwischen Abschnitt 17b und 18b liegt auf der Innenseite des Wagenkastens.

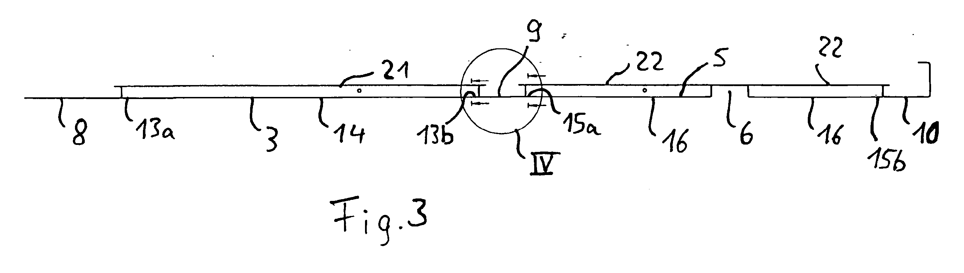

Wie bereits erwähnt, wird zunächst der Verbund der Blechteile für die Abschnitte 17, 18 hergestellt und durch entsprechendes Abkanten um die in Fig. 1 und Fig. 2 dargestellten, in Längsrichtung verlaufenden Kanten der C-förmige Längsträger 7 hergestellt. Wie der in Längsrichtung von links nach rechts in Fig. 3 verlaufende Querschnitt zeigt, weisen die Träger 9, 10 ebenfalls ein C-förmiges Profil auf, wobei die Querschenkel des Trägers 10 unterschiedlich lang sind, die Querschenkel des Trägers 9 jedoch nicht. Dagegen weist der Träger 8 ein L-förmiges Profil mit zusätzlich abgewinkeltem Ende des Querschenkels auf. Der in horizontaler Richtung verlaufende Querschnitt von Fig. 3 liegt in Fig. 1 etwas unterhalb der oberen Ränder der Blechelemente 3, 5 auf Höhe einer Aussparung 6 in dem Blechelement 5.

Wie die in Fig. 1 und Fig. 2 durch in vertikaler Richtung verlaufende Linien dargestellte Segmentierung der Blechelemente 3, 5 zeigt, sind die Blechelemente 3, 5 wie auch der Längsträger 7 nicht durch ein einziges Blechteil gebildet. Vielmehr bestehen beide Blechelemente 3, 5 aus jeweils drei Blechteilen 13a, 14, 13b im Fall des Blechelements 3 und 15a, 16, 15b im Fall des Blechelements 5.

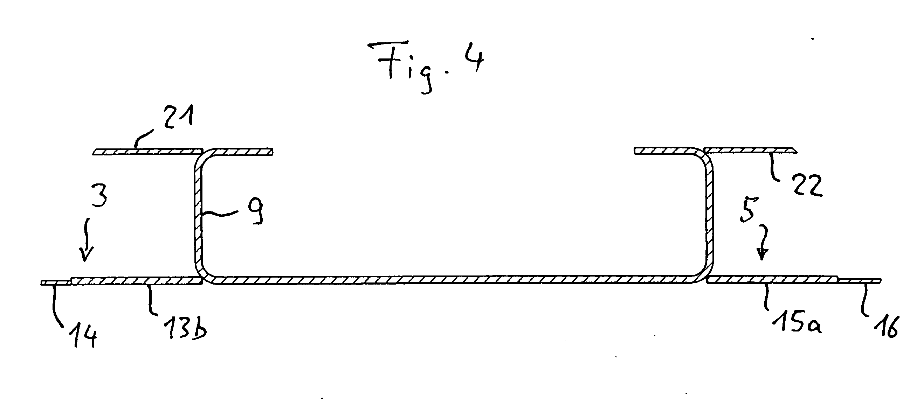

Die Blechteile 13a, 13b sowie 15a, 15b haben, wie der vergrößerte Ausschnitt des Querschnitts von Fig. 3 in Fig. 4 zeigt, eine größere Blechdicke, im Ausführungsbeispiel die doppelte Blechdicke der Blechteile 14, 16. Die Blechelemente 3, 5 werden wie der oben beschriebene Verbund zur Herstellung des Längsträgers 7 hergestellt. Dabei weisen die großflächigen Oberflächen der Blechelemente 3, 5, die die Außenoberfläche des Wagenkastens bilden und die in Fig. 3 und Fig. 4 unten liegen, an den Übergängen der Blechteile 13, 14 und 15, 16 keinen Versatz auf.

An den freien stirnseitigen Enden der Blechelemente 3, 5 sind diese mit dem jeweiligen Träger 8, 9, 10 über eine vorzugsweise durch Laserstrahl-Schweißen erzielte Linien-Schweißnaht verbunden. Alternativ können die Blechelement 3, 5 (z.B. im Fall von Aluminiumblechen) miteinander verlötet sein. Zur weiteren Aussteifung des Wagenkastens sind zusätzliche, im Abstand zu den Blechelementen 3, 5 verlaufende Blechteile 21, 22 vorgesehen, die an ihren stirnseitigen Enden ebenfalls mit den Trägern 8, 9 bzw. 10 verschweißt sind.

Wie am besten aus Fig. 1 erkennbar ist, bilden die Blechteile 13, 15, die die größere Bleckdicke aufweisen, streifenförmige, in vertikaler Richtung entlang der Träger 8, 9, 10 verlaufende Übergangsbereiche zwischen dem jeweiligen Träger 8, 9, 10 und dem Blechelement 3, 5. Diese streifenförmigen Bereiche enden wie auch das gesamte Blechelement 3, 5 an der Unterkante der Fensteröffnung 2a, 2b. Die in vertikaler Richtung verlaufenden Träger 8, 10 und 11 enden oben an den aufgrund der größeren Blechdicke verstärkten Abschnitten 17 des Längsträgers 7. Dadurch ist insgesamt eine sehr stabile Konstruktion des Wagenkastenteils 1 bei geringem Gewicht erzielt, da geringer belastete Bereiche aus Blech geringerer Blechdicke gefertigt sind.

Am Beispiel des Übergangs zwischen Blechteil 14 und Blechteil 13b des Blechelements 3 zeigt Fig. 5, dass sich die Schweißnaht 25 in Längsrichtung (horizontale Richtung in Fig. 5) über einen Abschnitt erstreckt, der etwa so groß ist wie die Dicke des dünneren Blechteils 14. Der Bereich, der Material aufweist, welches beim Schweißvorgang geschmolzen wird und anschließend wieder erstarrt, d.h. die Schweißnaht bildet, ist schraffiert und mit dem Bezugszeichen 25 bezeichnet. Der Bereich 25 erstreckt sich an der Seite des Blechteils 13b mit der größeren Blechdicke über dessen gesamte Dicke, so dass die Schweißnaht bestmöglich mit beiden Blechteilen 14, 13b verbunden ist.

## Patentansprüche

1. Schienenfahrzeug-Wagenkasten, wobei der Wagenkasten zumindest ein aus Blechen hergestellte Blechelement (3, 5, 7) aufweist, insbesondere ein Außenwandelement, ein Profilelement und/oder einen Träger, wobei
- das Blechelement (3, 5, 7) ein erstes Blechteil (14) mit einer ersten Blechdicke und ein zweites Blechteil (13) mit einer zweiten Blechdicke aufweist,
- das erste Blechteil (14) und das zweite Blechteil (13) jeweils ein stirnseitiges Ende aufweisen, das sich quer zu den großflächigen Blechoberflächen des Blechteils (13, 14) über die Dicke des Blechteils (13, 14) erstreckt,
- das Blechelement (3, 5) ein Außenwandelement ist,
- der Wagenkasten zusätzlich einen Träger (8, 9, 10) aufweist,
- das Blechelement (3, 5) an einem zweiten stirnseitigen Ende, das von dem zweiten Blechteil (13, 15) gebildet ist, mit dem Träger (8, 9, 10) verbunden ist, insbesondere verschweißt ist,
**dadurch gekennzeichnet, dass**
- die erste Blechdicke kleiner ist als die zweite Blechdicke,
- die stirnseitigen Enden des ersten Blechteils (14) und des zweiten Blechteils (13) über eine Schweißnaht oder Lötnaht miteinander verbunden sind, sodass ein fester Verbund des ersten und des zweiten Blechteils (13, 14) hergestellt ist,
- der Träger (8, 9, 10) eine sich von unten nach oben erstreckende Säule des Wagenkastens ist und eine Fensteröffnung (2a, 2b) des Wagenkastens seitlich begrenzt,
- sich das zweite Blechteil (13) von unten nach oben lediglich bis zu der Fensteröffnung (2a, 2b) erstreckt, nicht aber über den Unterrand der Fensteröffnung (2a, 2b) hinaus.

2. Wagenkasten nach Anspruch 1, wobei das erste Blechteil (14) und das zweite Blechteil (13) an den stirnseitigen Enden derart über die Schweißnaht oder Lötnaht miteinander verbunden sind, dass sich eine der großflächigen Blechoberflächen ohne Versatz über die Schweißnaht oder Lötnaht erstreckt und die gegenüberliegende Blechoberfläche aufgrund der unterschiedlichen Blechdicke des ersten und zweiten Blechteils (13, 14) mit Versatz über die Schweißnaht oder Lötnaht erstreckt.

3. Wagenkasten nach einem der vorhergehenden Ansprüche, wobei das Blechelement (7) ein Träger ist, der durch Verformen, insbesondere durch Abkanten, des aus dem ersten (18) und dem zweiten Blechteil (17) hergestellten Verbundes hergestellt ist,
sodass die großflächigen Blechoberflächen abgewinkelt und/oder gekrümmt verlaufen, und wobei der Verlauf der Schweißnaht oder Lötnaht durch die Verformung ebenfalls abgewinkelt und/oder gekrümmt ist.

4. Verfahren zum Herstellen eines Schienenfahrzeug-Wagenkastens, wobei ein Blechelement des Wagenkastens, insbesondere ein Außenwandelement, ein Profilelement und/oder ein Träger, aus Blechen hergestellt wird, wobei
- das Blechelement (3,5, 7) zumindest aus einem ersten Blechteil (14, 18) mit einer ersten Blechdicke und einem zweiten Blechteil (13, 17) mit einer zweiten Blechdicke hergestellt wird,
- das erste Blechteil (14) und das zweite Blechteil (13) jeweils ein stirnseitiges Ende aufweisen, das sich quer zu den großflächigen Blechoberflächen des Blechteils (13, 14) über die Dicke des Blechteils (13, 14) erstreckt,
- das Blechelement (3, 5) als ein Außenwandelement hergestellt wird,
- das Blechelement (3, 5) an einem zweiten stirnseitigen Ende, das von dem zweiten Blechteil gebildet ist, mit einem Träger (8, 9, 10) des Wagenkastens verbunden wird, insbesondere verschweißt wird,
**dadurch gekennzeichnet, dass**
- die erste Blechdicke kleiner ist als die zweite Blechdicke,
- die stirnseitigen Enden des ersten Blechteils (13, 14) und des zweiten Blechteils (13, 14) über eine Schweißnaht oder Lötnaht miteinander verbunden werden, sodass ein fester Verbund des ersten und des zweiten Blechteils (13, 14) hergestellt wird,
- der Träger (8, 9, 10) eine sich von unten nach oben erstreckende Säule des Wagenkastens bildet und eine Fensteröffnung (2a, 2b) des Wagenkastens seitlich begrenzt und
- sich das zweite Blechteil (13) von unten nach oben lediglich bis zu der Fensteröffnung (2a, 2b) erstreckt, nicht aber über den Unterrand der Fensteröffnung (2a, 2b) hinaus.

5. Verfahren nach dem vorhergehenden Anspruch, wobei das erste Blechteil (14) und das zweite Blechteil (13) an den stirnseitigen Enden derart über die Schweißnaht (25) oder Lötnaht miteinander verbunden wird, dass sich eine der großflächigen Blechoberflächen ohne Versatz über die Schweißnaht (25) oder Lötnaht erstreckt und die gegenüberliegende Blechoberfläche aufgrund der unterschiedlichen Blechdicke des ersten und zweiten Blechteils (13, 14) mit Versatz über die Schweißnaht (25) oder Lötnaht erstreckt.

6. Verfahren nach einem der vorhergehenden Ansprüche, wobei das Blechelement (7) als Träger hergestellt wird, indem, insbesondere durch Abkanten, der aus dem ersten (18) und dem zweiten (17) Blechteil hergestellte Verbund derart verformt wird, dass die großflächigen Blechoberflächen abgewinkelt und/oder gekrümmt verlaufen und der Verlauf der Schweißnaht oder Lötnaht durch die Verformung ebenfalls abgewinkelt und/oder gekrümmt ist.

## Claims

1. Rail vehicle coach body, the coach body having at least one sheet metal element (3, 5, 7) produced from metal sheets, in particular an external wall element, a profile element and/or a girder, wherein
- the sheet metal element (3, 5, 7) has a first sheet metal part (14) having a first sheet thickness and a second sheet metal part (13) having a second sheet thickness,
- the first sheet metal part (14) and the second sheet metal part (13) respectively have a face end extending transversely to the large-area sheet surfaces of the sheet metal part (13, 14) over the thickness of the sheet metal part (13, 14),
- the sheet metal element (3, 5) is an external wall element,
- the coach body additionally has a girder (8, 9, 10),
- the sheet metal element (3, 5), at a second face end formed by the second sheet metal part (13, 15), is connected, in particular is welded, to the girder (8, 9, 10), **characterized in that**
- the first sheet thickness is less than the second sheet thickness,
- the face ends of the first sheet metal part (14) and of the second sheet metal part (13) are joined together by a weld joint or soldered joint, so that a solid compound structure of the first and second sheet metal part (13, 14) is produced,
- the girder (8, 9, 10) laterally delimits a pillar of the coach body, extending from the bottom upwards, and a window opening (2a, 2b) of the coach body,
- the second sheet metal part (13) extends from the bottom upwards only as far as the window opening (2a, 2b), but not beyond the bottom edge of the window opening (2a, 2b).

2. Coach body according to Claim 1, wherein the first sheet metal part (14) and the second sheet metal part (13) are joined together at the face ends by the weld joint or soldered joint in such a way that one of the large-area sheet surfaces extends without offset over the weld joint or soldered joint, and the opposite sheet surface, due to the different sheet thickness of the first and second sheet metal part (13, 14), extends with offset over the weld joint or soldered joint.

3. Coach body according to one of the preceding claims, wherein the sheet metal element (7) is a girder, which is produced by deformation, in particular by chamfering, of the compound structure created from the first (18) and the second sheet metal part (17), so that the large-area sheet surfaces run in an angled-off and/or curved path, and wherein the course of the weld joint or soldered joint, as a result of the deformation, is likewise angled-off and/or curved.

4. Method for producing a rail vehicle coach body, a sheet metal element of the coach body, in particular an external wall element, a profile element and/or a girder, being produced from sheets, wherein
- the sheet metal element (3, 5, 7) is produced at least from a first sheet metal part (14, 18) having a first sheet thickness and a second sheet metal part (13, 17) having a second sheet thickness,
- the first sheet metal part (14) and the second sheet metal part (13) respectively have a face end extending transversely to the large-area sheet surfaces of the sheet metal part (13, 14) over the thickness of the sheet metal part (13, 14),
- the sheet metal element (3, 5) is produced as an external wall element,
- the sheet metal element (3, 5), at a second face end formed by the second sheet metal part, is connected, in particular is welded, to a girder (8, 9, 10) of the coach body, **characterized in that**
- the first sheet thickness is less than the second sheet thickness,
- the face ends of the first sheet metal part (14) and of the second sheet metal part (13) are joined together by a weld joint or soldered joint, so that a solid compound structure of the first and second sheet metal part (13, 14) is produced,
- the girder (8, 9, 10) laterally delimits a pillar of the coach body, extending from the bottom upwards, and a window opening (2a, 2b) of the coach body, and
- the second sheet metal part (13) extends from the bottom upwards only as far as the window opening (2a, 2b), but not beyond the bottom edge of the window opening (2a, 2b).

5. Method according to one of the preceding claims, wherein the first sheet metal part (14) and the second sheet metal part (13) are joined together at the face ends by the weld joint (25) or soldered joint in such a way that one of the large-area sheet surfaces extends without offset over the weld joint (25) or soldered joint, and the opposite sheet surface, due to the different sheet thickness of the first and second sheet metal part (13, 14), extends with offset over the weld joint (25) or soldered joint.

6. Method according to one of the preceding claims, wherein the sheet metal element (7) is produced as a girder, in that, in particular by chamfering, the compound structure created from the first (18) and the second (17) sheet metal part is deformed in such a way that the large-area sheet surfaces run in an angled-off and/or curved path, and the course of the weld joint or soldered joint, as a result of the deformation, is likewise angled-off and/or curved.

## Revendications

1. Caisse de véhicule ferroviaire, la caisse présentant au moins un élément (3, 5, 7) composé de tôles, en particulier un élément de paroi extérieure, un élément profilé et/ou un support,
- l'élément en tôle (3, 5, 7) présentant une première partie de tôle (14) dotée d'une première épaisseur de tôle et une seconde partie de tôle (13) dotée d'une seconde épaisseur de tôle,
- la première partie de tôle (14) et la seconde partie de tôle (13) présentant chacune une extrémité côté avant qui s'étend transversalement aux grandes surfaces de tôle de la partie de tôle (13, 14) sur son épaisseur,
- l'élément en tôle (3, 5) étant un élément de paroi extérieure,
- la caisse présentant en outre un support (8, 9, 10),
- l'élément en tôle (3, 5) étant relié, en particulier soudé au support (8, 9, 10), sur une seconde extrémité côté avant qui est formée par une seconde partie de tôle (13, 15),
**caractérisée en ce que**
- la première épaisseur de tôle est inférieure à la seconde épaisseur de tôle,
- les extrémités côté avant de la première partie de tôle (14) et de la seconde partie de tôle (13) sont reliées par un cordon de soudure ou de brasure les unes aux autres de sorte qu'un assemblage fixe de la première et de la seconde parties de tôle (13, 14) soit établi,
- le support (8, 9, 10) est une colonne s'étendant de bas en haut de la caisse et délimite latéralement une ouverture de fenêtre (2a, 2b) de la caisse,
- la seconde partie de tôle (13) s'étend de bas en haut juste jusqu'à l'ouverture de fenêtre (2a, 2b) mais pas au-delà du bord inférieur de l'ouverture de fenêtre (2a, 2b).

2. Caisse selon la revendication 1, la première partie de tôle (14) et la seconde partie de tôle (13) étant reliées entre elles sur les extrémités côté avant par le cordon de soudure ou de brasure de telle manière que l'une des grandes surfaces de tôle s'étende sans déport sur le cordon de soudure ou de brasure et la surface de tôle opposée s'étende, en raison de l'épaisseur de tôle différente de la première et de la seconde parties en tôle (13, 14), avec déport sur le cordon de soudure ou de brasure.

3. Caisse selon l'une quelconque des revendications précédentes, l'élément en tôle (7) étant un support qui est fabriqué par déformation, en particulier par pliage de l'assemblage composé de la première et de la seconde parties de tôle (17) de sorte que les grandes surfaces de tôle s'étendent coudées et/ou courbées et l'étendue du cordon de soudure ou de brasure soit aussi coudée et/ou courbée par la déformation.

4. Procédé de fabrication d'une caisse de véhicule ferroviaire, un élément en tôle de la caisse, en particulier un élément de paroi extérieure, un élément profilé et/ou un support étant fabriqué en tôles,
- l'élément en tôle (3, 5, 7) étant composé d'une première partie de tôle (14) dotée d'une première épaisseur de tôle et d'une seconde partie de tôle (13) dotée d'une seconde épaisseur de tôle,
- la première partie de tôle (14) et la seconde partie de tôle (13) présentant chacune une extrémité côté avant qui s'étend transversalement aux grandes surfaces de tôle de la partie de tôle (13, 14) sur son épaisseur,
- l'élément en tôle (3, 5) étant un élément de paroi extérieure,
- l'élément en tôle (3, 5) étant relié, en particulier soudé à un support (8, 9, 10) de la caisse sur une seconde extrémité côté avant qui est formée par la seconde partie de tôle,
**caractérisé en ce que**
- la première épaisseur de tôle est inférieure à la seconde épaisseur de tôle,
- les extrémités côté avant de la première partie de tôle (13, 14) et de la seconde partie de tôle (13, 14) sont reliées par un cordon de soudure ou de brasure les unes aux autres de sorte qu'un assemblage fixe de la première et de la seconde parties de tôle (13, 14) soit établi,
- le support (8, 9, 10) forme une colonne s'étendant de bas en haut de la caisse et délimite latéralement une ouverture de fenêtre (2a, 2b) de la caisse, et
- la seconde partie de tôle (13) s'étend de bas en haut juste jusqu'à l'ouverture de fenêtre (2a, 2b) mais pas au-delà du bord inférieur de l'ouverture de fenêtre (2a, 2b).

5. Procédé selon la revendication précédente, la première partie de tôle (14) et la seconde partie de tôle (13) étant reliées entre elles sur les extrémités côté avant par le cordon de soudure (25) ou de brasure de telle manière que l'une des grandes surfaces de tôle s'étende sans déport sur le cordon de soudure (25) ou de brasure et la surface de tôle opposée s'étende, en raison de l'épaisseur de tôle différente de la première et de la seconde parties de tôle (13, 14), avec déport sur le cordon de soudure (25) ou de brasure.

6. Procédé selon l'une quelconque des revendications précédentes, l'élément en tôle (7) étant fabriqué comme un support en déformant, en particulier par pliage, l'assemblage composé de la première (18) et de la seconde parties en tôle (17) de telle manière que les grandes surfaces de tôle s'étendent coudées et/ou courbées et l'étendue du cordon de soudure ou de brasure soit aussi coudée et/ou courbée par la déformation.
